# EUROPEAN PATENT APPLICATION

(11) **EP 4 445 980 A1**
(43) Date of publication of application: **16.10.2024**
(21) Application number: 23167424.3
(22) Date of filing: 11.04.2023
(51) Int. Cl.: B01D 3/00, B01D 3/20, C08F 6/00

(54) **A DEVOLATILIZATION APPARATUS COMPRISING A PERFORATED ROOF ELEMENT**

(71) Applicant: Sulzer Management AG, 8401 Winterthur (CH)
(72) Inventor: The designation of the inventor has not yet been filed
(74) Representative: Henkel & Partner mbB

(57) **Abstract**

The present invention relates to a devolatilization apparatus for devolatilizing a composition comprising a volatile component, such as for devolatilizing a solid or liquid polymer composition comprising unreacted monomer, solvent and/or byproduct, wherein the devolatilization apparatus comprises a vessel comprising at least one inlet for the composition to be devolatilized, at least one outlet for devolatilized composition, at least one outlet for gas and at least one tray, wherein the at least one tray comprises a perforated bottom element, comprises at least one baffle being arranged on the perforated bottom element separating the perforated bottom element into at least one inner section comprising one or more openings and at least one outer section comprising one or more openings, and comprises at least one perforated roof element comprising one or more openings and being arranged above at least a part of the inner section of the perforated bottom element, wherein the openings of the at least one outer section of the perforated bottom element have a larger cross-sectional area than the openings of the at least one inner section of the perforated bottom element and than the openings of the at least one perforated roof element.

## Description

The present invention relates to a devolatilization apparatus for devolatilizing a composition comprising a volatile component, such as for devolatilizing a solid or liquid polymer composition comprising unreacted monomer and solvent, as well as to a devolatilization process making use of such a devolatilization apparatus.

Devolatilization or degassing, respectively, denotes the controlled removal of gases and of other volatile substances, such as solvents or moisture, from solids and liquids. Devolatilization is commonly used to remove volatile components, which are mostly components having a comparable low molecular weight, such as residual monomers, solvents, reaction by-products and water, from polymers. This is necessary, in order to achieve a required purity of the respective polymer before its use by removing harmful and/or toxic components, by removing components negatively affecting the further processing of the polymer, such as its formability to articles, by removing components worsening the properties of the polymer, by removing components leading to an unpleasant smell of the polymer and/or by removing components being undesired for other reasons. Furthermore, the removal of monomers and solvent from a polymer composition allows to recover and potentially recycle the monomers and solvent in the process so as to increase the yield of the process as well as to reduce the quantity of waste.

In order to achieve a devolatilization, the component to be evaporated needs to have a higher partial pressure or higher thermodynamic activity, respectively, than the polymer. Moreover, the component to be evaporated needs to be able to diffuse through the polymer composition to the phase boundary. In particular in case of viscous polymers or polymer melts - and typically polymers and polymer melts are comparable viscous - the slow diffusion rate may be a speed limiting factor. Therefore, in order to accelerate the devolatilization, the composition being subjected to the devolatilization is usually devolatilized at an elevated temperature and/or devolatilized at a subatmospheric pressure, because both measurements increase the thermodynamic activity of the volatile component(s) and an increase of the temperature moreover decreases the viscosity of the polymer, thus improving the diffusion of the volatile component(s) within the polymer.

Several types of devolatilization apparatuses are known, such as static and dynamic devolatilization apparatuses. While a dynamic devolatilization apparatus comprises moving parts, such as blades, in order to maintain a high interfacial concentration gradient and in order to maintain a high diffusion rate of the volatile component(s) within the polymer, a static devolatilization apparatus does not comprise moving parts, but comprises internals, such as one or more trays and in particular perforated trays, so as to create a high specific surface of the composition to be devolatilized and to distribute the composition to be devolatilized over the whole cross-section of the devolatilization apparatus. However, dynamic devolatilization apparatuses are, on account of their moving parts, connected with drastic disadvantages, such as being costly, requiring during the operation a high amount of energy, requiring regular maintenance and having a comparable high leak rate.

Thus, static devolatilization apparatuses have in comparison to dynamic devolatilization apparatuses the advantages - due to the absence of moving parts - of less energy consumption, of less installation costs, of requiring less maintenance and of having a comparable low leak rate. Common types of static devolatilization apparatuses are flash devolatilization apparatuses and falling strand devolatilization apparatuses. Flash devolatilization apparatuses typically comprise a preheater, for example a heat exchanger, and a flash chamber. During the operation, the polymer composition to be devolatilized is firstly pumped to the heat exchanger, where it is heated up and optionally pressurized in order to decrease its viscosity, before it is then pumped from the heat exchanger into the top of the flash chamber, where the pressure is relieved and evaporation of the volatile component(s) occurs. Thereafter, the polymer composition falls downwardly through the flash chamber, during which a plurality of bubbles of the volatile component(s) is nucleated in the polymer composition. This results in a large amount of surface area for mass transfer and thus leads to a fast devolatilization. While the volatilized vapor phase is collected and condensed in a condenser, the residual polymer composition is collected at the bottom of the flash chamber and is removed via pumping. Falling strand devolatilization apparatuses operate similarly to flash devolatilization apparatuses, but comprise one or more perforated trays in order to create a high specific surface of the composition to be devolatilized, in order to to distribute the composition to be devolatilized over the whole cross-section of the devolatilization apparatus, in order to form falling strands of the composition to be devolatilized, in order to promote the growth of bubbles of the volatile component(s) and in order to accelerate the diffusion process.

In order to be flexible concerning the kind of composition, such as polymer, to be devolatilized, a devolatilization apparatus shall be desirably suitable to be used for the devolatilization of a wide range of compositions and in particular for the devolatilization of compositions having a comparably high viscosity as well as for the devolatilization of compositions having a comparably low viscosity. However, in order to prevent a blocking of the internals of the devolatilization apparatus during the devolatilization of a composition having a high viscosity, for instance by clogging of openings of the internals by the high viscosity composition to be devolatilized, devolatilization apparatuses are usually designed for high viscosity compositions only. As a consequence thereof, usual devolatilization apparatuses are not at all optimized for devolatilizing compositions having a low viscosity, thus they only insufficiently devolatilize low viscosity compositions.

Alternatively, a devolatilization apparatuses may be designed for devolatilizing low viscosity compositions only. However, in this case the devolatilization apparatuses cannot be used for devolatilizing high viscosity compositions.

In order to overcome this problem, it has been already suggested to install in a devolatilization apparatus two kinds of internals, one for devolatilizing low viscosity compositions and one for devolatilizing high viscosity compositions. Such a devolatilization apparatus comprises an inlet line, which splits into a sub-inlet line for low viscosity compositions and into a sub-inlet line for high viscosity compositions, and a valve, through which the composition to be devolatilized may be either led into the sub-inlet line for low viscosity compositions or into the sub-inlet line for high viscosity compositions. Thus, depending on the specific devolatilization application, the polymer feed to be devolatilized is either directed to the internal(s) for devolatilizing high viscosity compositions or to the internal(s) devolatilizing low viscosity compositions. However, such a devolatilization apparatus is expensive and during its use for devolatilizing high viscosity polymers only a part of the internal(s) is used, so that the yield per volume of the devolatilization apparatus is quite low.

In view of this, the object underlying the present invention is to provide a devolatilization apparatus for devolatilizing a composition comprising a volatile component, such as for devolatilizing a solid or liquid polymer composition comprising unreacted monomer, solvent and/or by-product, which allows to efficiently and with low operational costs devolatilize in a compact design not only high viscosity compositions, such as those having a dynamic viscosity of at least 1,000 Pa·s, but also low viscosity compositions, such as those having a dynamic viscosity of less than 1.000 Pa·s and in particular of less than 500 Pa·s.

In accordance with the present invention, this object is satisfied by providing a devolatilization apparatus for devolatilizing a composition comprising a volatile component, such as for devolatilizing a solid or liquid polymer composition comprising unreacted monomer, solvent and/or by-product, wherein the devolatilization apparatus comprises a vessel comprising at least one inlet for the composition to be devolatilized, at least one outlet for devolatilized composition, at least one outlet for gas and at least one tray, wherein the at least one tray comprises a perforated bottom element, comprises at least one baffle being arranged on the perforated bottom element separating the perforated bottom element into at least one inner section comprising one or more openings and at least one outer section comprising one or more openings, and comprises at least one perforated roof element comprising one or more openings and being arranged above at least a part of the inner section of the perforated bottom element, wherein the openings of the at least one outer section of the perforated bottom element have a larger cross-sectional area than the openings of the at least one inner section of the perforated bottom element and than the openings of the at least one perforated roof element.

By subdividing the perforated bottom element of the one or more trays of the devolatilization apparatus, seen in the horizontal direction, into at least one inner section and at least one outer section, and by arranging a perforated roof element above the at least one inner section of the perforated bottom element, wherein the openings of the at least one outer section have a larger cross-sectional area than the openings of the at least one inner section and than the openings of the at least one perforated roof element, the one or more trays are suitable to be used for devolatilizing high viscosity compositions as well as for devolatilizing low viscosity compositions. The composition to be devolatilized is led during the operation onto the perforated roof element. If the composition to be devolatilized has a sufficiently low viscosity so that it enters and passes through the openings of the perforated roof element, the composition falls onto the surface of the at least one inner section of the perforated bottom element, enters and passes through the openings of the at least one inner section of the perforated bottom element. However, if the composition to be devolatilized has a respective high viscosity, on account of which it cannot enter and pass through the openings of the perforated roof element, the composition flows over the perforated roof element and falls onto the surface of the at least one outer section of the perforated bottom element, enters and passes through the openings of the at least one outer section of the perforated bottom element. All in all, the devolatilization apparatus in accordance with the present invention has the advantage of a compact design and allows to efficiently and with low operational costs devolatilize compositions with a wide viscosity range.

The term perforated roof element is used herein to designate any kind of perforated element. The term "roof" is only used to easily distinguish this element from other elements of the devolatilization apparatus, without intent to constructively restrict this element.

In accordance with the present invention, the at least one outer section of the perforated bottom element, the at least one inner section of the perforated bottom element and the at least one perforated roof element each comprise one or more openings. This means in accordance with the present invention openings, which extend through the perforated bottom element and through the perforated roof element, respectively, thus allowing liquid to flow through the openings from the upper side of the perforated bottom element and through the perforated roof element, respectively, to its opposite lower side.

In accordance with the present invention, the at least one tray of the devolatilization apparatus comprises a perforated bottom element. The perforated bottom element may be formed from one perforated bottom plate. Alternatively, the perforated bottom element may comprise two or more perforated bottom plates, which are arranged adjacent to each other and fixed with each other so as to form the perforated bottom element. If the perforated bottom element comprises two or more perforated bottom plates, the respective perforated bottom plates are preferably fluid-tightly connected with each other, so that liquid may only flow through the perforated bottom element via the openings of the perforated bottom plates, but not via gaps between adjacent perforated bottom plates.

The present invention is not particularly limited concerning the form and size of the perforated bottom element or the one or more perforated bottom plates, respectively. Good results are for instance achieved, when the one or more perforated bottom plates have, seen in top view, a polygonal, a rectangular, a square, a circular, an oval or a trapezoidal form. However, it is preferred that the perforated bottom element has, seen in top view, the form of a rectangle, pentagon or hexagon. Moreover, it is preferred that the single perforated bottom plates, if the perforated bottom element comprises two or more perforated bottom plates, have, seen in top view, the form of a rectangle or of a half trapeze, such as that some of the perforated bottom plates have the form of a rectangle and the others the form of a half trapeze. Most preferably, the perforated bottom element has, seen in top view, the form of a hexagon, which is formed from one respectively formed perforated bottom plate or from two or more perforated bottom plates, each of which having independently from each other a rectangular or half trapezoid form.

Also concerning the material of the perforated bottom element or the one or more perforated bottom plates, respectively, no particular restrictions exist, as long as the material is resistant to the composition to be devolatilized and mechanically stable. Also, it is preferred that the material of the perforated bottom plate(s) has a comparable good heat conductivity. Good results are in particular obtained, when each the one or more perforated bottom plates is made from stainless steel, carbon steel, hastelloy or the like.

The preferred thickness of the perforated bottom element or of the one or more perforated bottom plates, respectively, depends on the mechanical stability of the material, from which it is made or they are made, respectively. Good results are for instance obtained, when the thickness of the perforated bottom element or of each of the one or more perforated bottom plates, respectively, is 1 to 30 mm and more preferably of 5 to 15 mm.

In accordance with a particular preferred embodiment of the present invention, the at least one baffle fluid-tightly separates the at least one inner section from the at least one outer section of the perforated bottom element.

The term baffle means in this connection any wall and is thus equivalent to a partition wall. Fluid-tightly separating the at least one inner section from the at least one outer section means that no fluid may flow through the one or more baffles from any of the at least one inner section to any of the at least one outer section of the perforated bottom element and vice versa. In other words, if the at least one tray comprises two or more baffles, all baffles are preferably connected with each other so as to fluid-tightly separate any of the one or more inner sections from the one or more outer sections. Moreover, all of the one or more baffles are preferably non-perforated.

The present invention is not particularly limited concerning the material of the at least one baffle, as long as the material is resistant to the composition to be devolatilized and mechanically stable. Good results are in particular obtained, when each the at least one baffle is made from stainless steel, carbon steel, hastelloy or the like. Particularly preferably, the at least one baffle is made from the same material as the perforated bottom element.

Preferably, the at least one baffle extends from the surface of the perforated bottom element at least substantially vertically upwards, wherein at least substantially vertically means that the angle between the at least one baffle and the vertical direction is at most 10°, preferably at most 5°, more preferably at most 1° and most preferably 0°. The vertical direction is the direction being perpendicular to the plane of the perforated bottom element.

In a further development of the idea of the present invention, it is suggested that each of the one or more baffles has a thickness of 1 to 30 mm and more preferably of 5 to 15 mm.

In addition, it is preferred that each of the one or more baffles has a height of 100 to 1,000 mm and more preferably of 300 to 500 mm.

In accordance with a particular preferred embodiment of the present invention, the at least one tray comprises one baffle having a hollow cylindrical form or the at least one tray comprises four baffles, wherein each of the four baffles is connected with each of its opposite sides with another of the four baffles so that all four baffles form, seen from above, the form of a hollow rectangle or hollow square, thereby surrounding a rectangular or square inner section of the perforated bottom element.

In the aforementioned embodiment, it is further preferred that the perforated bottom element has, seen in top view, the form of a hexagon, wherein the hollow cylindrical baffles or the four baffles, respectively, is/are arranged so that the midpoint of the inner section being surrounded by the hollow cylindrical baffles or the four baffles, respectively, is also the midpoint of the hexagon. In other words, preferably the inner section is arranged concentrically around the midpoint of the perforated bottom element.

The present invention is not particularly limited concerning the form of the at least one perforated roof element. Good results are in particular obtained, when the at least one perforated roof element has the form of a hollow dome, of a hollow conus, of a hollow pyramid, of a hollow truncated conus or of a hollow truncated pyramid.

As set out above, the function of the at least one perforated roof element is to guide the composition to be devolatilized in dependency from its viscosity either - namely in case of a comparable low viscosity - through the openings of the perforated roof element onto the surface of the at least one inner section of the perforated bottom element or - namely in case of a comparable high viscosity - along the peripheral area of the perforated roof element onto the surface of the at least one outer section of the perforated bottom element. On account thereof, it is preferred that the at least one perforated roof element covers the whole area or at least substantially the whole area of the at least one inner section of the perforated bottom element. Thus, it is preferred that the area of the projection plane of the at least one perforated roof element has substantially the same area as the surface area of at least one inner section of the perforated bottom element, wherein substantially the same area means that the area of the projection plane of the at least one perforated roof element area is 100 to 150%, preferably 100 to 130%, more preferably 100 to 110%, still more preferably 100 to 105% and most preferably the same as the surface area of at least one inner section of the perforated bottom element. The term projection plane of the perforated roof element means the base area or ground area, respectively, of the perforated roof element.

In order to allow the at least one perforated roof element to selectively guide the composition to be devolatilized in dependency from its viscosity either through the openings of the perforated roof element onto the surface of the at least one inner section of the at least one perforated bottom element or along the peripheral area of the perforated roof element onto the surface of the at least one outer section of the perforated bottom element, it is suggested in a further development of the idea of the present invention that the peripheral area of the at least one perforated bottom element is moderately inclined with regard to the horizontal plane so as to avoid that the composition to be devolatilized, such as polymer melt, flows even in case of a low viscosity due to gravitational force along the peripheral area onto the surface of the at least one outer section of the perforated bottom element instead of flowing through the openings of the at least one perforated roof element onto the surface of the at least one inner section of the perforated bottom element. In view of this, it is preferred that the angle between the peripheral area of the at least one perforated roof element and the horizontal plane is 1 to 60°, preferably 10 to 45° and more preferably 15 to 30°. For instance, the the at least one perforated roof element has the form of a hollow conus, of a hollow pyramid, of a hollow truncated conus or of a hollow truncated pyramid, wherein the angle between the peripheral area of the at least one perforated roof element and the horizontal plane is 1 to 60°, preferably 10 to 45° and more preferably 15 to 30°.

Good results are in particular obtained, when the at least one perforated roof element has a height of 3 to 300 cm and more preferably of 10 to 150 cm. Height means here the vertical distance between the lower projection plane and the uppermost point of the perforated roof element.

The at least one perforated roof element is preferably arranged on top of the at least one baffle surrounding the at least one inner section of the perforated bottom element or in a distance above the at least one baffle surrounding the at least one inner section of the perforated bottom element so that it covers at most 150%, preferably at most 130%, more preferably at most 110%, still more preferably at most 105% and most preferably all of the surface area of at least one inner section of the perforated bottom element. In the latter case, in which the at least one perforated roof element is arranged in a distance above at least one inner section of the perforated bottom element, it is preferred that the perforated roof element is connected with one or more baffles by means of one or more connection means, each of which may have for instance the form of a bar.

In accordance with a particular preferred embodiment of the present invention, the tray comprises a perforated bottom element having, seen in top view, the form of a hexagon, wherein four non-perforated baffles are arranged on the surface of the perforated bottom element so as to form a hollow rectangle or hollow square being arranged around the midpoint of the perforated bottom element, thereby fluid-tightly separating the perforated bottom element into one rectangular or square inner section and an outer section, wherein a perforated roof element having the form of a hollow dome, of a hollow conus or of a hollow pyramid is arranged on top of the four non-perforated baffles or above the four non-perforated baffles and being connected with the four non-perforated baffles by one or more connection bars.

In accordance with an alternatively particular preferred embodiment of the present invention, the tray comprises a perforated bottom element having, seen in top view, the form of a hexagon, wherein a hollow cylindrical baffles is arranged on the surface of the perforated bottom element so as to form a cylinder being arranged around the midpoint of the perforated bottom element, thereby fluid-tightly separating the perforated bottom element into one circular inner section and an outer section, wherein a perforated roof element having the form of a hollow dome, of a hollow conus or of a hollow pyramid is arranged on top of the four non-perforated baffles or above the four non-perforated baffles and being connected with the four non-perforated baffles by one or more connection bars.

The present invention is not particularly restricted concerning the relative sizes of the inner and outer sections of the perforated bottom element. Good results are obtained, when the ratio of the surface area of the at least one inner section divided by the total surface area of the perforated bottom element is 20 to 70% and preferably 30 to 50%. The total surface area of the perforated bottom element is the sum of the areas of the at least one inner section and of the at least one outer section.

In accordance with the present invention, each of the at least one inner section of the perforated bottom element, of the at least one outer section of the perforated bottom element and of the at least one perforated roof element comprises openings. All of the openings of the at least one inner section of the perforated bottom element may have the same form and same cross-sectional area or they may vary with respect to their form and/or cross-sectional area. Also, all of the openings of the at least one outer section of the perforated bottom element may have the same form and same cross-sectional area or they may vary with respect to their form and/or cross-sectional area. Likewise thereto, all of the openings of the at least one perforated roof element may have the same form and same cross-sectional area or they may vary with respect to their form and/or cross-sectional area. In the case that all openings of each section or element, respectively, have the same cross-sectional area, all openings of the at least one outer section of the perforated bottom element have a larger cross-sectional area than all the openings of the at least one inner section of the perforated bottom element and than all the openings of the at least one perforated roof element. In the case that the cross-sectional area of the openings of each section or element, respectively, vary, the average cross-sectional area of the openings of the at least one outer section of the perforated bottom element is larger than the average cross-sectional area of the openings of the at least one inner section of the perforated bottom element and is lager than the average cross-sectional area of the openings of the at least one perforated roof element. The average cross-sectional area of the openings of one section or element, respectively, is the sum of the cross-sectional areas of all openings of the respective section or element divided by the total number of all openings of the respective section or element.

The present invention is not particularly limited concerning the cross-sectional form of the openings of the at least one inner section of the perforated bottom element, of the openings of the at least one outer section of the perforated bottom element and of the openings of the at least one perforated roof element. For instance, some or preferably all of the openings of the at least one inner section of the perforated bottom element, of the openings of the at least one outer section of the perforated bottom element and of the openings of the at least one perforated roof element may have a polygonal, a rectangular, a square, a circular, an oval or a trapezoidal cross-sectional form. More preferably, at least some and most preferably all of the openings of the at least one inner section of the perforated bottom element, of the openings of the at least one outer section of the perforated bottom element and of the openings of the at least one perforated roof element have a circular cross-sectional form.

Furthermore, it is preferred that all the openings of the at least one inner section of the perforated bottom element have at least substantially the same cross-sectional area. In addition, it is preferred that all the openings of the at least one outer section of the perforated bottom element have at least substantially the same cross-sectional area, wherein, as set out above, the (average) cross-sectional area of the openings of the at least one outer section of the perforated bottom element is larger than the (average) cross-sectional area of the openings of the at least one inner section of the perforated bottom element. Likewise, it is preferred that all the openings of the at least one perforated roof element have at least substantially the same cross-sectional area, wherein, as set out above, the (average) cross-sectional area of the openings of the at least one perforated roof element is smaller than the (average) cross-sectional area of the openings of the at least one outer section of the perforated bottom element. At least substantially the same the cross-sectional area means in this connection that any of the openings of the respective section or element, respectively, has a cross-sectional area differing by not more than 70%, more preferably by not more than 40%, yet more preferably by not more than 10%, still more preferably by not more than 1% and most preferably not at all from the average cross-sectional area of all openings of the respective section or element, respectively. Again, the average cross-sectional area of all openings is the sum of the cross-sectional areas of all openings of the respective section or element divided by the total number of all openings of the respective section or element.

In accordance with the present invention, the openings of the at least one outer section of the perforated bottom element have a larger cross-sectional area than the openings of the at least one inner section of the perforated bottom element and than the openings of the at least one perforated roof element. Good results are in particular obtained, when the average cross-sectional area of the openings of the at least one outer section of the perforated bottom is at least 50%, preferably at least 125%, more preferably at least 300%, still more preferably at least 1,500%, yet more preferably at least 3,000% and most preferably at least 6,300% larger than the average cross-sectional area of the openings of the at least one inner section of the perforated bottom as well as than the average cross-sectional area of the openings of the at least one perforated roof element.

Good results are in particular obtained, when all openings of the at least one outer section of the perforated bottom have the same cross-sectional area, all openings of the at least one inner section of the perforated bottom have the same cross-sectional area and all openings of the at least one perforated roof element have the same cross-sectional area, wherein the cross-sectional area of the openings of the at least one outer section of the perforated bottom is at least 50%, preferably at least 125%, more preferably at least 300%, still more preferably at least 1,500%, yet more preferably at least 3,000% and most preferably at least 6,300% larger than the cross-sectional area of the openings of the at least one inner section of the perforated bottom as well as than the cross-sectional area of the openings of the at least one perforated roof element.

In a further development of the idea of the present invention it is preferred that all openings of the at least one outer section of the perforated bottom have a circular cross-sectional form and have the same diameter, that all openings of the at least one inner section of the perforated bottom have a circular cross-sectional form and have the same diameter and that all openings of the at least one perforated roof element have a circular cross-sectional form and have the same diameter, wherein the diameter of the openings of the at least one outer section of the perforated bottom is at least 25%, preferably at least 50%, more preferably at least 100%, still more preferably at least 300% and most preferably at least 700% larger than the diameter of the openings of the at least one inner section of the perforated bottom as well as than the diameter of the openings of the at least one perforated roof element.

In accordance with a further particular preferred embodiment of the present invention, the cross-sectional area of the openings of the at least one perforated roof element is the same or at least substantially the same than that of the openings of the at least one inner section of the perforated bottom element. In view of this, it is preferred that the average cross-sectional area of the openings of the at least one perforated roof element is 70 to 130%, preferably 80 to 120%, more preferably 90 to 110% and still more preferably 95 to 105% of the average cross-sectional area of the openings of the at least one inner section of the perforated bottom element. Most preferably, the average cross-sectional area of the openings of the at least one perforated roof element is the same as the average cross-sectional area of the openings of the at least one inner section of the perforated bottom element.

Again, good results are in particular obtained, when all openings of the at least one perforated roof element have the same cross-sectional area and all openings of the at least one inner section of the perforated bottom have the same cross-sectional area, wherein the cross-sectional area of the openings of the at least one perforated roof element is 70 to 130%, preferably 80 to 120%, more preferably 90 to 110% and still more preferably 95 to 105% and most preferably the same as the cross-sectional area of the openings of the at least one inner section of the perforated bottom element.

In a further development of the idea of the present invention it is preferred that all openings of the at least one perforated roof element have a circular cross-sectional form and have the same diameter and that all openings of the at least one inner section of the perforated bottom have a circular cross-sectional form and have the same diameter, wherein the diameter of the openings of the at least one outer section of the perforated bottom is 70 to 130%, preferably 80 to 120%, more preferably 90 to 110%, still more preferably 95 to 105% and most preferably the same as the diameter of the openings of the at least one inner section of the perforated bottom element.

Good results are in particular obtained, when the average cross-sectional area of the openings of the at least one outer section of the perforated bottom element is preferably at least 3 cm², more preferably at least 5 cm² and still more preferably at least 10 cm², whereas the average cross-sectional area of the openings of the at least one inner section of the perforated bottom element as well as the average cross-sectional area of the openings of the at least one perforated roof element is at most 10 cm², preferably at most 5 cm² and more preferably at most 3 cm². Preferably, the average cross-sectional area of the openings of the at least one outer section of the perforated bottom element is at most 80 cm², more preferably at most 50 cm², and still more preferably at most 30 cm², whereas the average cross-sectional area of the openings of the at least one inner section of the perforated bottom element as well as the average cross-sectional area of the openings of the at least one perforated roof element is at least 0.2 cm², more preferably at least 0.7 cm² and still more preferably at least 1 cm².

Again, good results are in particular obtained, when all openings of the at least one perforated roof element have the same cross-sectional area, all openings of the at least one inner section of the perforated bottom have the same cross-sectional area and all openings of the at least one outer section of the perforated bottom have the same cross-sectional area. In this embodiment, the cross-sectional area of the openings of the at least one outer section of the perforated bottom element is preferably at least 3 cm², more preferably at least 5 cm² and still more preferably at least 10 cm², whereas the cross-sectional area of the openings of the at least one inner section of the perforated bottom element as well as the cross-sectional area of the openings of the at least one perforated roof element is preferably at most 10 cm², more preferably at most 5 cm² and still more preferably at most 3 cm². Preferably, the cross-sectional area of the openings of the at least one outer section of the perforated bottom element is at most 80 cm², more preferably at most 50 cm² and still more preferably at most 30 cm², whereas the cross-sectional area of the openings of the at least one inner section of the perforated bottom element as well as the cross-sectional area of the openings of the at least one perforated roof element is preferably at least 0.2 cm², more preferably at least 0.7 cm² and still more preferably at least 1 cm².

Good results are in particular obtained, when all openings of the at least one outer section of the perforated bottom have a circular cross-section and have the same diameter, all openings of the at least one inner section of the perforated bottom have a circular cross-section and have the same diameter and all openings of the at least one perforated roof element have a circular cross-section and have the same diameter. In this embodiment, the diameter of the openings of the at least one outer section of the perforated bottom element is preferably at least 20 mm, more preferably at least 30 mm and still more preferably at least 40 mm, whereas the diameter of the openings of the at least one inner section of the perforated bottom element as well as the diameter of the openings of the at least one perforated roof element is preferably at most 30 mm, more preferably at most 25 mm and still more preferably at most 20 mm. Preferably, the diameter of the openings of the at least one outer section of the perforated bottom element is at most 100 mm, more preferably at most 80 mm and still more preferably at most 60 mm, whereas the diameter of the openings of the at least one inner section of the perforated bottom element as well as the cross-sectional area of the openings of the at least one perforated roof element is preferably at least 5 mm, more preferably at least 10 mm and still more preferably at least 15 mm.

In a further development of the idea of the present invention, it is proposed that at least one weir is arranged at the outer edges of the perforated bottom element, wherein the at least one weir extends from the surface of the perforated bottom element at least substantially vertically upwards. Preferably, the at least one weir fluid-tightly surrounds the perforated bottom element so that no liquid contained on the surface of the perforated bottom element may flow outside of the perforated bottom element. Again, at least substantially vertically means that the angle between the at least one baffle and the vertical direction is at most 10°, preferably at most 5°, more preferably at most 1° and most preferably 0°.

Good results are in particular obtained, when the height of the at least one weir is 10 to 100 cm and more preferably 20 to 50 cm.

The present invention is not particularly limited concerning the kind of the at least one inlet for the composition to be devolatilized. For instance, the at least one inlet for the composition to be devolatilized is an opening of an inlet line, wherein the inlet line may be a pipe.

In accordance with a further preferred embodiment of the present invention, the inlet is located above and spaced apart from the midpoint of the at least one perforated roof element.

In dependency from the amount of composition to be devolatilized per time period and from the surface area of the perforated bottom element of the at least one tray, the devolatilization apparatus comprises one tray or two or more trays. If the devolatilization apparatus comprises two or more trays, preferably all of the trays are embodied as described above and all trays are arranged spaced apart on top of each other. For instance, the devolatilization apparatus comprises one tray or 2 to 10 trays, more preferably 2 to 5 trays and most preferably 2 trays.

In a further development of the idea of the present invention, it is suggested that upstream of the at least one inlet for the composition to be devolatilized a preheater element is arranged. This allows to temperate the composition to be devolatilized to an appropriate temperature. The preheater element may be any known heating element, such as a tube heat exchanger with a mixing element, a heat exchanger with mixing bundles or a plate frame heat exchanger in particular for low viscosity fluids. For instance, the at least one inlet for the composition to be devolatilized is an opening of an inlet line, wherein the inlet line is connected upstream of the inlet with the preheater element.

In accordance with a further particularly preferred embodiment of the present invention, upstream of the at least one inlet for the composition to be devolatilized at least one static mixer is arranged. This allows to mix the composition to be devolatilized comprising a volatile component, i.e. the vapor-liquid mixture, so as to enhance during the operation of the devolatilization apparatus the mass transfer of volatiles from the bulk liquid to the liquid surface as well as to maximize the vapor-liquid interacting surface.

A static mixer is a mixer not comprising moving parts and in particular not comprising rotating parts. Static mixers usually produce a mixing effect by generating a turbulent flow due to static, i.e. non-moving elements, such as plates, bars, crossbars, baffles, helically formed deflection means, grids and the like. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neftenbach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM.

Good results are for instance obtained, when the at least one inlet for the composition is an opening of an inlet line, wherein the inlet line is connected upstream of the inlet with at least one static mixer.

More preferably, the inlet line is connected, seen in upstream direction, first with one or more static mixers and further upstream with a preheater element.

In addition, a distributor may be arranged upstream of the inlet, wherein the inlet is then the outlet of the distributor.

In accordance with another aspect, the present invention relates to a method for devolatilizing a composition comprising a volatile component comprising the steps of feeding the composition to be devolatilized into the inlet of the above-described devolatilization apparatus, of withdrawing gas from the outlet for gas and of withdrawing devolatilized composition from the outlet for devolatilized composition.

Subsequently, the present patent application is described by way of example with reference to advantageous embodiments and to the enclosed drawings.

There is shown:
- Fig. 1: shows a schematic longitudinal-sectional view of a devolatilization apparatus according one embodiment of the present invention.
- Fig. 2: shows a perspective view of the two trays included in the devolatilization apparatus shown in figure 1.
- Fig. 3a to e: show four different types of static mixers being useable in the devolatilization apparatus and in the method in accordance with the present invention.

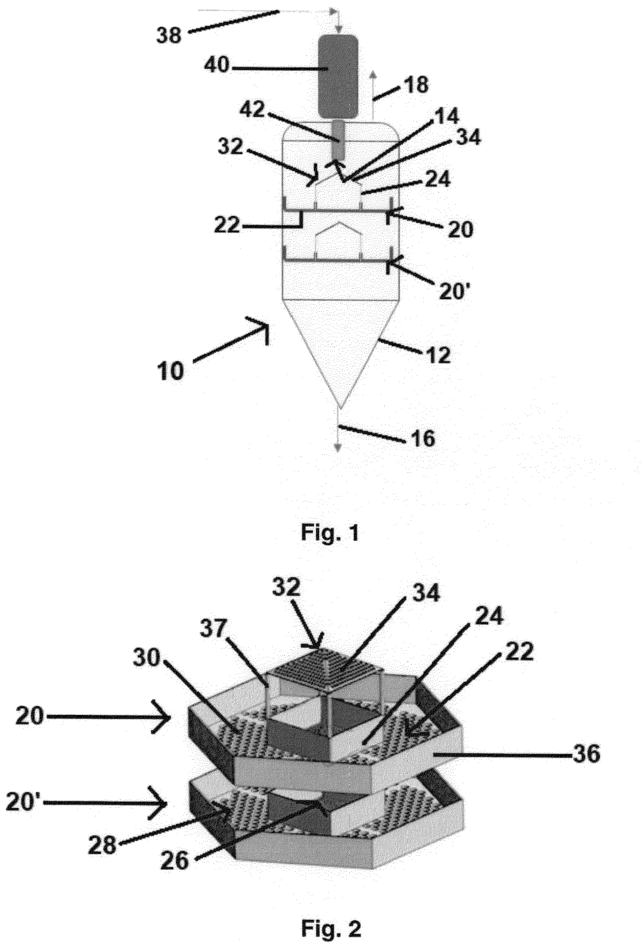

The devolatilization apparatus 10 shown in figure 1 for devolatilizing a composition comprising a volatile component, such as for devolatilizing a solid or liquid polymer composition comprising unreacted monomer, solvent and/or by-product, comprises a vessel 12 comprising at least one inlet 14 for the composition to be devolatilized, at least one outlet 16 for devolatilized composition, at least one outlet 18 for gas and at least two trays 20, 20' being arranged spaced apart on top of each other.

Each of the two trays 20, 20' comprises a perforated bottom element 22, comprises four baffles 24 being arranged on the perforated bottom element 22 separating the perforated bottom element 22 into an inner section 26 comprising one or more openings and into an outer section 28 comprising one or more openings 30, comprises a perforated roof element 32 and comprises a weir 36. While the weir 36 is arranged at the outer edges of the perforated bottom element 22 and is oriented vertically upwards, the perforated roof element 32 has the form of a pyramid, comprises one or more openings 34 on its peripheral walls and is arranged above the inner section 26 of the perforated bottom element 22 and is connected with the four baffles 24 by means of four bars 37. Each of the four baffles 24 is connected with each of its opposite sides with another of the four baffles 24 so that all four baffles 24 form, seen from above, the form of a hollow square, thereby surrounding the square inner section 26 of the perforated bottom element 22. The openings 30 of the outer section 28 of the perforated bottom element 22 have a larger cross-sectional area than the openings of the inner section 26 of the perforated bottom element 22 and than the openings 34 of the perforated roof element 32. Moreover, the devolatilization apparatus 10 comprises an inlet line 38, which is connected with a preheater element 40 and downstream thereof with a static mixer 42, wherein the downstream end of the static mixer 42 forms the inlet 14.

During the operation, the composition to be devolatilized is fed via inlet line 38 through the preheating element 40 and through the static mixer 42 to the inlet 42, from which the composition to be devolatilized drops onto the midpoint of the perforated roof element 32 in form of a pyramid. If the composition to be devolatilized has a sufficiently low viscosity so that it enters and passes through the openings 34 of the perforated roof element 32, the composition falls onto the surface of the inner section 26 of the perforated bottom element 22, enters and passes through the openings of the inner section 26 of the perforated bottom element 22. However, if the composition to be devolatilized has a respective high viscosity, on account of which it cannot enter and pass through the openings 34 of the perforated roof element 32, the composition flows over the peripheral walls of the perforated roof element 32 and falls onto the surface of the outer section 28 of the perforated bottom element 22, enters and passes through the openings 30 of the outer section 28 of the perforated bottom element 22. All in all, the devolatilization apparatus 10 in accordance with the present invention is characterized by a compact design and allows to efficiently and with low operational costs devolatilize compositions with a wide viscosity range.

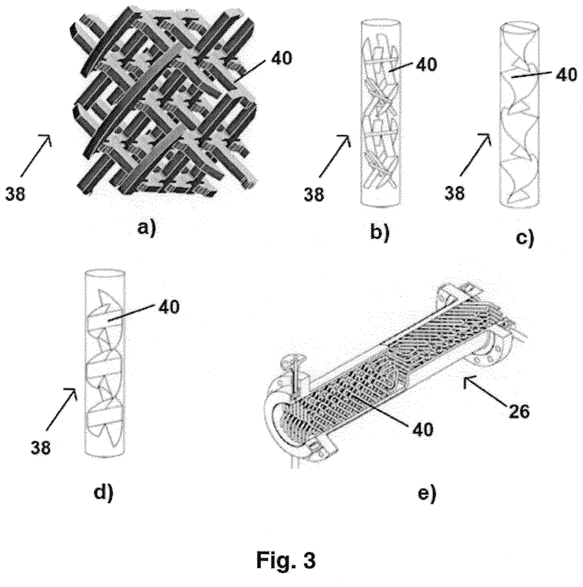

Fig. 3 shows five different types of static mixers useable in the devolatilization apparatus and in the method in accordance with the present invention, namely in Fig. 3a a static mixer 42 of the x-type comprising deflection means 44 in the form of crossbars having in a plan view as well as in a side view the x-like form. Fig. 3b shows a static mixer 42 of the baffle plate-type comprising longitudinal deflection means 44, whereas Fig. 3c and 3d show static mixers 42 with curved deflection means 44. Fig. 3e shows a combined static mixer and heat transfer element 46 with tube-like deflection means 44 being formed so that they function as heat transfer element by transporting heat transfer medium within the tubes and simultaneously as static mixer for liquid being transported outside of the tube-like deflection means 44, such as it is commercially distributed by Sulzer Chemtech Ltd under the tradename SMR.

### Reference Numeral List

- 10: Devolatilization apparatus
- 12: Vessel
- 14: Inlet
- 16: Outlet for devolatilized composition
- 18: Outlet for gas
- 20, 20': Trays
- 22: Perforated bottom element
- 24: Baffle
- 26: Inner section of the perforated bottom element
- 28: Outer section of the perforated bottom element
- 30: Openings of the outer section
- 32: Perforated roof element
- 34: Openings of the perforated roof element
- 36: Weir
- 37: Bar
- 38: Inlet line
- 40: Preheater element
- 42: Static mixer
- 44: Deflection means of the static mixer
- 46: Heat transfer element of the static mixer

## Claims

1. A devolatilization apparatus for devolatilizing a composition comprising a volatile component, such as for devolatilizing a solid or liquid polymer composition comprising unreacted monomer, solvent and/or by-product, wherein the devolatilization apparatus comprises a vessel comprising at least one inlet for the composition to be devolatilized, at least one outlet for devolatilized composition, at least one outlet for gas and at least one tray, wherein the at least one tray comprises a perforated bottom element, comprises at least one baffle being arranged on the perforated bottom element separating the perforated bottom element into at least one inner section comprising one or more openings and at least one outer section comprising one or more openings, and comprises at least one perforated roof element comprising one or more openings and being arranged above at least a part of the inner section of the perforated bottom element, wherein the openings of the at least one outer section of the perforated bottom element have a larger cross-sectional area than the openings of the at least one inner section of the perforated bottom element and than the openings of the at least one perforated roof element.

2. The devolatilization apparatus in accordance with claim 1, wherein the perforated bottom element comprises one perforated bottom plate or at least two perforated bottom plates being arranged adjacent to each other.

3. The devolatilization apparatus in accordance with claim 1 or 2, wherein the at least one baffle fluid-tightly separates the at least one inner section from the at least one outer section of the perforated bottom element.

4. The devolatilization apparatus in accordance with any of the preceding claims, wherein the at least one baffle extends from the surface of the perforated bottom element at least substantially vertically upwards, wherein at least substantially vertically means that the angle between the at least one baffle and the vertical direction is at most 10°, preferably at most 5°, more preferably at most 1° and most preferably 0°.

5. The devolatilization apparatus in accordance with any of the preceding claims, wherein the at least one tray comprises one hollow cylindrical baffle or four baffles, wherein each of the four baffles is connected with each of its opposite sides with another of the four baffles so that all four baffles form, seen from above, the form of a hollow rectangle or hollow square.

6. The devolatilization apparatus in accordance with claim 5, wherein the perforated bottom element has, seen in top view, the form of a hexagon,
wherein the one hollow cylindrical baffle is arranged so that the midpoint of the circular inner section is also the midpoint of the hexagon or wherein the four baffles are arranged so that the midpoint of the rectangular or square inner section is also the midpoint of the hexagon.

7. The devolatilization apparatus in accordance with any of the preceding claims, wherein the at least one perforated roof element has the form of a hollow dome, of a hollow conus, of a hollow pyramid, of a hollow truncated conus or of a hollow truncated pyramid.

8. The devolatilization apparatus in accordance with any of the preceding claims, wherein the area of the projection plane of the at least one perforated roof element has substantially the same area as the surface area of at least one inner section of the perforated bottom element, wherein substantially the same area means that the area of the projection plane of the at least one perforated roof element area is 100 to 150%, preferably 100 to 130%, more preferably 100 to 110%, still more preferably 100 to 105% and most preferably the same as the surface area of at least one inner section of the perforated bottom element.

9. The devolatilization apparatus in accordance with any of the preceding claims, wherein the at least one perforated roof element has the form of a hollow conus, of a hollow pyramid, of a hollow truncated conus or of a hollow truncated pyramid, wherein the angle between the peripheral area of the at least one perforated roof element and the horizontal plane is 1 to 60°, preferably 10 to 45° and more preferably 15 to 30°.

10. The devolatilization apparatus in accordance with any of the preceding claims, wherein the average cross-sectional area of the openings of the at least one outer section of the perforated bottom is at least 50%, preferably at least 125%, more preferably at least 300%, still more preferably at least 1,500%, yet more preferably at least 3,000% and most preferably at least 6,300% larger than the average cross-sectional area of the openings of the at least one inner section of the perforated bottom as well as than the average cross-sectional area of the openings of the at least one perforated roof element.

11. The devolatilization apparatus in accordance with any of the preceding claims, wherein the average cross-sectional area of the openings of the at least one perforated roof element is 70 to 130%, preferably 80 to 120%, more preferably 90 to 110%, still more preferably 95 to 105% and most preferably the same as the average cross-sectional area of the openings of the at least one inner section of the perforated bottom element.

12. The devolatilization apparatus in accordance with any of the preceding claims, wherein all openings of the at least one outer section of the perforated bottom have the same cross-sectional area and a circular cross-sectional form, all openings of the at least one inner section of the perforated bottom have the same cross-sectional area and a circular cross-sectional form as well as all openings of the at least one perforated roof element have the same cross-sectional area and a circular cross-sectional form, wherein the diameter of the openings of the at least one outer section of the perforated bottom element is at least 20 mm, preferably at least 30 mm and more preferably at least 40 mm, whereas the diameter of the openings of the at least one inner section of the perforated bottom element as well as the diameter of the openings of the at least one perforated roof element is at most 30 mm, preferably at most 25 mm and more preferably at most 20 mm.

13. The devolatilization apparatus in accordance with any of the preceding claims, wherein the at least one inlet for the composition is an opening of an inlet line, wherein the inlet is located above and spaced apart from the midpoint of the at least one perforated roof element.

14. The devolatilization apparatus in accordance with any of the preceding claims, wherein the at least one inlet for the composition is an opening of an inlet line, wherein the inlet line is connected upstream of the inlet with a preheater element and/or with at least one static mixer.

15. A method for devolatilizing a composition comprising a volatile component comprising the steps of feeding the composition to be devolatilized into the inlet of the devolatilization apparatus in accordance with any of the preceding claims, of withdrawing gas from the outlet for gas and of withdrawing devolatilized composition from the outlet for devolatilized composition.
